(19) **Europäisches Patentamt**
**European Patent Office**
**Office européen des brevets**

(11) **EP 4 424 541 A1**

(12) # EUROPEAN PATENT APPLICATION
published in accordance with Art. 153(4) EPC

(43) Date of publication:
**04.09.2024 Bulletin 2024/36**

(21) Application number: **23769705.7**

(22) Date of filing: **13.03.2023**

(51) International Patent Classification (IPC):
**B60L 15/20** (2006.01)          **B60L 58/27** (2019.01)
**H02P 29/62** (2016.01)

(52) Cooperative Patent Classification (CPC):
**Y02T 10/70; Y02T 10/72**

(86) International application number:
**PCT/CN2023/081045**

(87) International publication number:
**WO 2023/174202 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.03.2022 CN 202210264853**

(71) Applicants:
• **VIRIDI E-MOBILITY TECHNOLOGY (NINGBO)
CO., LTD.
Ningbo, Zhejiang 315336 (CN)**
• **Zeekr Automobile (Ningbo Hangzhou Bay New
Zone)
Co., Ltd.
Ningbo, Zhejiang 315336 (CN)**

• **Zhejiang Geely Holding Group Co., Ltd.
Hangzhou, Zhejiang 310051 (CN)**

(72) Inventors:
• **LI, Mingfu
Hangzhou Bay New Zone Ningbo, Zhejiang
315336 (CN)**
• **XU, Xunjin
Hangzhou Bay New Zone Ningbo, Zhejiang
315336 (CN)**
• **ZHANG, Yunhui
Hangzhou Bay New Zone Ningbo, Zhejiang
315336 (CN)**

(74) Representative: **Barker Brettell LLP
100 Hagley Road
Edgbaston
Birmingham B16 8QQ (GB)**

(54) **ACTIVE HEATING METHOD AND APPARATUS FOR ELECTRIC MOTOR, AND DEVICE,
STORAGE MEDIUM AND PROGRAM PRODUCT**

(57)      An active heating method for an electric motor, an apparatus, a device, a storage medium and a program product. The method includes: receiving a heating instruction sent by a heat management system, where the heating instruction includes a heating power; inputting a current to the electric motor and adjusting a phase of three-phase pulses according to the heating power; continuously detecting an electric motor iron loss power, determining a difference between the electric motor iron loss power and the heating power, and adjusting a phase difference of the three-phase pulses according to the difference between the electric motor iron loss power and the heating power until the difference between the electric motor iron loss power and the heating power is less than a preset value, to realize active heating of the electric motor.

FIG. 2

EP 4 424 541 A1

## Description

This application claims priority to Chinese patent application No. 202210264853.0, filed with the Chinese National Intellectual Property Administration on March 17, 2022 and entitled "ACTIVE HEATING METHOD FOR ELECTRIC MOTOR, APPARATUS, DEVICE, STORAGE MEDIUM AND PROGRAM PRODUCT", which is hereby incorporated by reference in its entirety.

## TECHNICAL FIELD

The present application relates to the field of electric vehicles and, in particular, to an active heating method for an electric motor, an apparatus, a device, a storage medium and a program product.

## BACKGROUND

At present, electric vehicle technology is developing rapidly, and electric vehicles are gradually replacing traditional fuel vehicles. However, development of the electric vehicles is also facing many difficulties now. For example, in winter, battery performance of the electric vehicles will decline due to low temperature. Active heating of batteries is one of important means to improve the battery performance.

At present, active heating of a battery in the related art is usually to increase a copper loss of an electric motor by changing a duty cycle of one of three-phase currents of the electric motor, so as to realize heating of the electric motor, and then to transfer heat of the electric motor to the battery to realize heating up of the battery, achieving a purpose of improving the battery performance.

However, the inventors have found that there is at least the following technical problem in the related art: the heating of the electric motor is realized by increasing the duty cycle, which has low heating efficiency, resulting in slow heating up of the battery.

## SUMMARY

The present application provides an active heating method for an electric motor, an apparatus, a device, a storage medium and a program product, which are used to solve the problem of slow heating up of a battery and increase speed of heating up of the electric motor.

In a first aspect, the present application provides an active heating method for an electric motor, including:

receiving a heating instruction sent by a heat management system, where the heating instruction includes a heating power;
inputting a current to the electric motor and adjusting a phase of three-phase pulses according to the heating power;
continuously detecting an electric motor iron loss power, determining a difference between the electric motor iron loss power and the heating power, and adjusting a phase difference of the three-phase pulses according to the difference between the electric motor iron loss power and the heating power until the difference between the electric motor iron loss power and the heating power is less than a preset value, to realize active heating of the electric motor.

Based on the above technical content, after receiving the heating instruction, the phase of the three-phase pulses of the electric motor is changed, which can achieve the purpose of increasing the electric motor iron loss to heat the electric motor. After changing the phase of the three-phase pulses, the determination of whether the difference between the obtained iron loss power and the heating power contained in the heating instruction meets the requirement is continued, so as to continue to adjust the phase difference, which achieves the effect of enabling the iron loss power of the electric motor to be close to the heating power, continuously improving the heating efficiency of the electric motor and thus improving the speed of heating up of the battery. In a possible implementation, inputting the current to the electric motor and adjusting the phase of the three-phase pulses according to the heating power includes: inputting the current with a preset magnitude to the electric motor, and looking up a corresponding phase difference in a preset first comparison table according to the heating power, where the preset first comparison table includes a correspondence between a heating power and a phase difference; adjusting the phase of the three-phase pulses using the corresponding phase difference.

Further, by looking up the phase difference corresponding to the heating power in the first comparison table, the phase difference close to or equal to the heating power is directly obtained, which reduces the time for subsequently adjusting the phase multiple times due to the insufficient iron loss power.

In a possible implementation, detecting the electric motor iron loss power includes: measuring an inlet-outlet temperature difference and a coolant flow rate of an electric drive system coolant, and determining the electric motor iron loss power according to the inlet-outlet temperature difference and the coolant flow rate.

Further, the electric motor iron loss power is determined by the inlet-outlet temperature difference and the coolant flow rate of the electric drive system coolant that are obtained by measurement, which facilitates the phase adjustment.

In a possible implementation, a calculation formula for determining the electric motor iron loss power according to the inlet-outlet temperature difference and the coolant flow rate is as follows:

$$P = C \cdot D \cdot F \cdot \Delta T \cdot A$$

where P is the electric motor iron loss power, C is a coolant specific heat capacity, D is a coolant density, F is the coolant flow rate, $\Delta T$ is the inlet-outlet temperature difference, and A is a constant.

Further, the electric motor iron loss power is calculated by the coolant specific heat capacity, the coolant density, the coolant flow rate, the inlet-outlet temperature difference and the constant, which facilitates the phase adjustment and increases the active heating speed of the electric motor.

In a possible implementation, after adjusting the phase difference of the three-phase pulses, the method further includes: if the phase difference of the three-phase pulses reaches a maximum value, and the difference between the electric motor iron loss power and the heating power is greater than the preset value, continuously detecting the electric motor iron loss power and increasing a current value until the difference between the electric motor iron loss power and the heating power is less than the preset value.

Further, the current is increased in a case that the phase difference reaches the maximum value and that the electric motor iron loss power does not reach the heating power and the difference between the electric motor iron loss power and the heating power is large, which achieves the effect of further increasing the heating efficiency of the electric motor.

In a possible implementation, after receiving the heating instruction sent by the heat management system, where the heating instruction includes the heating power, the method further includes: determining a current value of each phase of the three-phase pulses according to the heating power; changing a duty cycle of at least one phase of the three-phase pulses to increase a copper loss; measuring an actual copper loss power, and adjusting the phase of the three-phase pulses according to the actual copper loss power and the heating power to increase an iron loss; continuously detecting a total loss power generated by the copper loss and the iron loss, determining a difference between the total loss power and the heating power, and adjusting the phase difference of the three-phase pulses according to the difference between the total loss power and the heating power until the difference between the total loss power and the heating power is less than a preset value, to realize the active heating of the electric motor.

Further, the method of adjusting the duty cycle is used for heating firstly, and in a case that the adjustment of the duty cycle is not enough to achieve the required heating power, the method of adjusting the phase is then used to supplement the heat, which can achieve the effect of further increasing the heating speed of the battery.

In a possible implementation, determining the current value of each phase of the three-phase pulses according to the heating power includes: determining the current value of each phase of the three-phase pulses according to an electric motor resistance, a conduction voltage drop of a built-in power transistor, a single-switching loss per unit current of the built-in power transistor, a switching frequency of the built-in power transistor and a current relationship of the three-phase pulses.

Further, the current value of each phase is obtained by the electric motor resistance, the conduction voltage drop of the built-in power transistor, the single-switching loss per unit current of the built-in power transistor, the switching frequency of the built-in power transistor and the current relationship of the three-phase pulses, which enables the initial current value to be relatively large and is thus beneficial to faster temperature rise.

In a possible implementation, a calculation formula for determining the current value of each phase of the three-phase pulses according to the electric motor resistance, the conduction voltage drop of the built-in power transistor, the single-switching loss per unit current of the built-in power transistor, the switching frequency of the built-in power transistor and the current relationship of the three-phase pulses is as follows:

$$P = \left( I_a^2 + I_b^2 + I_c^2 \right) R + \left( I_a + I_b + I_c \right) V_{ce} + \left( I_a + I_b + I_c \right) Q \cdot F$$

where $-I_a = I_b + I_c$, $I_b = k \cdot I_c$

where $I_a$ is a current of phase a, $I_b$ is a current of phase b, $I_c$ is a current of phase c, R is the electric motor resistance, $V_{ce}$ is the conduction voltage drop of the built-in power transistor, Q is the single-switching loss per unit current of the built-in power transistor, F is the switching frequency of the built-in power transistor, and k is a constant determined according to a rotor position.

Further, by combining the preset formula and the current relationship of the three-phase pulses, the current value of each phase is calculated, which enables the initial current to be higher, thereby increasing the heating speed.

In a possible implementation, measuring the actual copper loss power includes: measuring its own current value and voltage value, and determining the actual copper loss power according to its own current value and voltage value; or measuring an inlet-outlet temperature difference and a coolant flow rate of an electric drive system coolant, and determining the actual copper loss power of the electric motor according to the inlet-outlet temperature difference and the coolant flow rate.

Further, the actual copper loss power is calculated by its own current value and voltage value, or the actual copper loss power is calculated by the inlet-outlet temperature difference and the coolant flow rate of the electric drive system coolant, which facilitates accurate determination of the difference between the total loss and the heating power and more accurate adjustment of the heating power.

In a possible implementation, adjusting the phase of the three-phase pulses according to the actual copper loss power and the heating power includes: calculating a difference between the actual copper loss power and the heating power, and looking up a corresponding phase difference in a second comparison table according to the difference between the actual copper loss power and the heating power, where the second comparison table includes a correspondence between a difference between an actual copper loss power and a heating power and a phase difference; adjusting the phase of the three-phase pulses using the corresponding phase difference.

Further, the phase difference corresponding to the difference between the actual copper loss power and the heating power is obtained by looking up the correspondence, and the phase of the three-phase pulses is adjusted using the obtained phase difference, which achieves the effect of accelerating the heating speed of the electric motor.

In a second aspect, the present application provides an active heating apparatus for an electric motor, including: an instruction receiving module, configured to receive a heating instruction sent by a heat management system, where the heating instruction includes a heating power; a first adjusting module, configured to input a current to the electric motor and adjust a phase of three-phase pulses according to the heating power; a second adjusting module, configured to continuously detect an electric motor iron loss power, determine a difference between the electric motor iron loss power and the heating power, and adjust a phase difference of the three-phase pulses according to the difference between the electric motor iron loss power and the heating power until the difference between the electric motor iron loss power and the heating power is less than a preset value, to realize active heating of the electric motor.

In a third aspect, the present application provides an electronic device, including: a processor, and a memory communicatively connected to the processor. The memory stores computer execution instructions, and the processor executes the computer execution instructions stored in the memory, so that the processor executes the active heating method for the electric motor as described above in the first aspect.

In a fourth aspect, the present application provides a computer-readable storage medium. The computer-readable storage medium stores computer execution instructions, and when the computer execution instructions are executed by a processor, the active heating method for the electric motor as described above in the first aspect is implemented.

In a fifth aspect, the present application provides a computer program product including a computer program. When the computer program is executed by a processor, the active heating method for the electric motor as described above in the first aspect is implemented.

Through the active heating method for the electric motor, the apparatus, the device, the storage medium and the program product provided by the present application, after receiving the heating instruction, the phase of the three-phase pulses of the electric motor is changed, which can achieve the purpose of increasing the electric motor iron loss to heat the electric motor. After changing the phase of the three-phase pulses, the determination of whether the difference between the obtained iron loss power and the heating power contained in the heating instruction meets the requirement is continued, so as to continue to adjust the phase difference, which achieves the effect of enabling the electric motor iron loss power to be close to the heating power, continuously improving the heating efficiency of the electric motor and thus improving the speed of heating up of the battery.

**BRIEF DESCRIPTION OF DRAWINGS**

FIG. 1 is a schematic diagram of an application scenario of an active heating method for an electric motor provided by an embodiment of the present application.

FIG. 2 is a schematic flowchart of an active heating method for an electric motor provided by an embodiment of the present application.

FIG. 3 is a schematic diagram of phases of three-phase pulses provided by an embodiment of the present application.

FIG. 4 is a schematic diagram of duty cycles of three-phase pulses provided by an embodiment of the present application.

FIG. 5 is a schematic diagram of an active heating apparatus for an electric motor provided by an embodiment of the present application.

FIG. 6 is a schematic structural diagram of an electronic device in an embodiment of the present application.

## DESCRIPTION OF EMBODIMENTS

Exemplary embodiments will be described in detail herein, and examples thereof are illustrated in the accompanying drawings. When the following description refers to the drawings, unless otherwise indicated, the same number in different drawings represents the same or similar element. The implementations described in the following exemplary embodiments do not represent all implementations consistent with the present application. On the contrary, they are only examples of apparatuses and methods consistent with some aspects of the present application as detailed in the appended claims.

Currently, electric vehicle technology is developing rapidly, and electric vehicles can often be seen on the streets of cities. The electric vehicles have the advantages of low noise, simple structure, zero emissions and so on. At the same time, the electric vehicles are also facing many challenges. For example, the number of charging piles needs to be improved, battery performance is degraded at low temperature, etc.

Faced with the problem of battery performance degradation, the current main solution is to adjust a duty cycle of a certain phase of three-phase currents in an electric motor to increase a copper loss of the electric motor so as to realize heating of the electric motor, and then to transfer heat of the electric motor to a battery by an apparatus such as a pipeline containing a coolant so as to realize heating of the battery. However, the current method of using the duty cycle to realize the heating of the electric motor has low heating efficiency, and the speed of increasing the temperature of the battery is slow.

In view of the above technical problems, the present application proposes the following technical concept: by inputting three-phase pulses to an electric motor after receiving a heating instruction, and changing a phase difference of the three-phase pulses to increase an iron loss of the electric motor, active heating of the electric motor is realized.

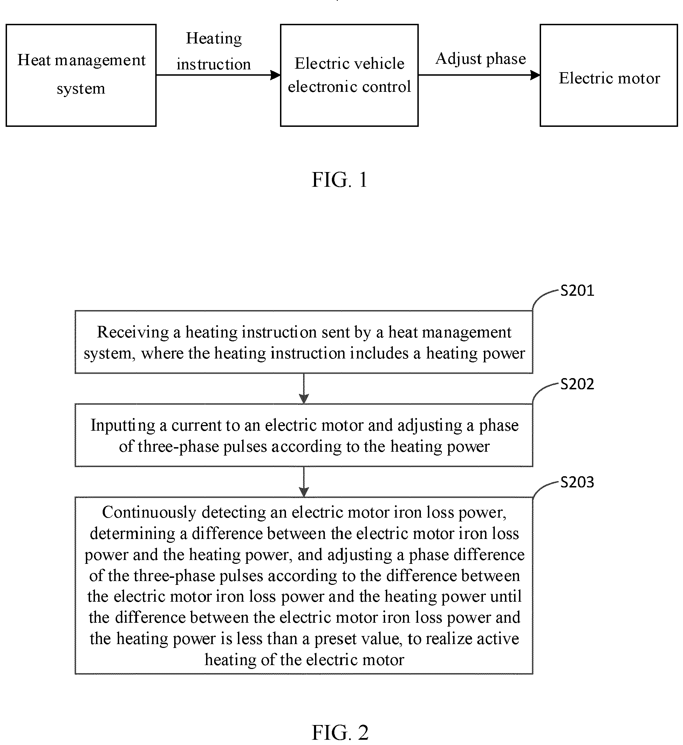

FIG. 1 is a schematic diagram of an application scenario of an active heating method for an electric motor provided by an embodiment of the present application. As shown in FIG. 1, in the scenario, a heat management system 101, electric vehicle electronic control 102, and an electric motor 103 are included.

In a specific implementation process, the heat management system 101 is configured to send a heating instruction to the electric vehicle electronic control 102. The heating instruction may be sent when temperature is lower than preset temperature, or may be sent after receiving a control instruction from an external device, such as a server, a computer, a mobile phone, etc.

The electric vehicle electronic control 102 is configured to input a current to the electric motor 103 and adjust a phase difference of three-phase pulses after receiving the heating instruction. After adjusting the phase difference of the three-phase pulses, an electric motor iron loss power is continuously detected. If a difference between the iron loss power and a heating power exceeds a preset value, adjustment of the phase difference of the three-phase pulses is continued until the difference between the iron loss power and the heating power is less than the preset value. Finally the heat is transferred to a battery through an apparatus such as a heat pump.

It can be understood that, the structure illustrated in the embodiment of the present application does not constitute a specific limitation on an active heating method for an electric motor. In some other feasible implementations of the present application, the foregoing architecture may include more or fewer components than those shown in the figure, or some components may be combined, or some components may be split, or there may be different component arrangements, which may be specifically determined according to an actual application scenario and is not limited herein. The components shown in FIG. 1 may be implemented in hardware, software, or a combination of software and hardware.

The technical solutions of the present application and how the technical solutions of the present application solve the above technical problems are described in detail below with specific embodiments. The following several specific embodiments may be combined with each other, and a same or similar concept or process may not be repeated in some embodiments. The embodiments of the present application will be described below with reference to the accompanying drawings.

FIG. 2 is a schematic flowchart of an active heating method for an electric motor provided by an embodiment of the present application. An executive entity of the embodiment of the present application may be the electric vehicle electronic control 102 in FIG. 1. As shown in FIG. 2, the method includes the following steps.

S201: receiving a heating instruction sent by a heat management system, where the heating instruction includes a heating power.

In this step, the heating instruction may further include an instruction for starting heating, and the heating power may be preset or may be obtained according to ambient temperature, which is not particularly limited in the present application.

S202: inputting a current to the electric motor and adjusting a phase of three-phase pulses according to the heating power.

In this step, inputting the current to the electric motor may be inputting the current with a preset magnitude, or may be inputting the current whose magnitude is directly proportional to the heating power to the electric motor. Adjusting the phase of the three-phase pulses may be adjusting the phase of a certain phase of the three-phase pulses with a preset phase value, so that the phase difference of the adjusted phase reaches the preset phase value. Adjusting the phase of the three-phase pulses may also be adjusting the phase of a certain phase of the three-phase pulses with a phase value directly proportional to the heating power, so that the phase difference of the three-phase pulses increases with the increase of the heating power.

The preset phase value may be 10°, 15°, 30°, etc.

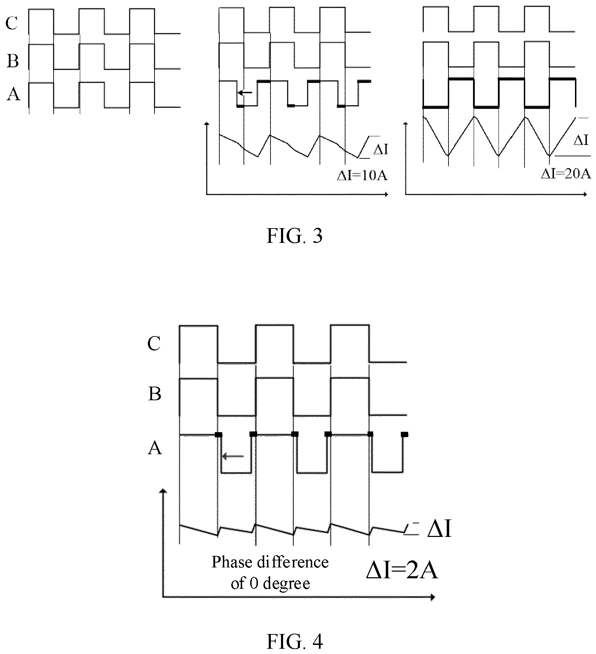

FIG. 3 is a schematic diagram of phases of three-phase pulses provided by an embodiment of the present application. As shown in the left picture in FIG. 3, the three-phase pulses consist of three phases A, B and C, which have the same phase and whose phase difference is zero. Adjusting the phase of phase A is taken as an example. As shown in the middle picture in FIG. 3, after the phase of phase A thereof is adjusted, the phase of phase A of the three-phase pulses changes. The phase difference of three phases is not 0, and the non-overlapping part of the three phases increases (as shown in the bold part in FIG. 3). When the voltage of phase A is equal to the battery voltage, and the voltages of phase B and C are 0, the current increases. When the voltage of phase A is 0 and the voltages of phase B and C are the battery voltage, the current drops rapidly. When the pulses of three phases overlap, the current overcomes a loop impedance, thus the current decreases slowly. The current waveform is a pulse waveform as shown in the lower part, where the highest current is, for example, 10A, and the present application does not limit the maximum value that the current reaches. The maximum adjustment range of the phase difference is shown in the right picture in FIG. 3. Here, the phase of phase A is adjusted by a 1/2 cycle, the phase difference is 180°, and the thick line part where the pulses of three phases do not overlap is the longest. When the voltage of phase A is the battery voltage, the current increases. When the voltage of phase A is the battery voltage is 0, and the voltages of phase B and C are the battery voltage, the current drops rapidly. In this case, the current peak value, which is 20A as shown in the right picture, is higher than that in the middle picture of FIG. 3. The present application also does not limit the maximum value that the current reaches in this case.

S203: continuously detecting an electric motor iron loss power, determining a difference between the electric motor iron loss power and the heating power, and adjusting a phase difference of the three-phase pulse according to the difference between the electric motor iron loss power and the heating power until the difference between the electric motor iron loss power and the heating power is less than a preset value, to realize active heating of the electric motor.

In this step, the electric motor iron loss power may be detected by detecting an electric motor temperature change, or detecting a coolant temperature change in an electric drive system, and then calculating the heat corresponding to the temperature change to obtain the electric motor iron loss power. Since there may be a difference between the temperature change obtained by detection and the actual power, a constant may be introduced for correction. If the difference obtained by subtracting the heating power from the electric motor iron loss power is greater than the preset value, then the phase difference is reduced. If the absolute value of the difference obtained by subtracting the heating power from the electric motor iron loss power is greater than the preset value, and the difference is not greater than the preset value, which indicates that the electric motor iron loss power is less than the heating power, then the phase difference is increased. The preset value may be a fixed value, or may be obtained by calculation according to a certain proportion of the heating power.

For example, if the electric motor iron loss power obtained by detection is 10kW and the heating power is 20kW, then the difference obtained by subtracting the heating power from the electric motor iron loss power is -10kW. If the preset value is 5kW, then the absolute value of the difference is greater than the preset value, and the difference is less than the preset value, which indicates that the phase difference needs to be increased. If the electric motor iron loss power obtained by detection is 18kW and the heating power is 20kW, then the difference obtained by subtracting the heating power from the electric motor iron loss power is -2kW. If the preset value is 5kW, then the difference and the absolute value of the difference are both less than the preset value, which indicates that the requirement is met and the phase difference no longer needs to be changed. The preset value may be 5kW as mentioned above, or may be 3kW or 2kW, etc., or may be a preset proportion of the heating power, such as 10%, 7% or 5% of the heating power, etc.

It can be known from the description of the above embodiment that in the embodiment of the present application, after receiving the heating instruction, the phase of the three-phase pulses of the electric motor is changed, which can realize the purpose of increasing the electric motor iron loss to heat the electric motor. After changing the phase of the three-phase pulses, the determination of whether the difference between the obtained iron loss power and the heating power contained in the heating instruction meets the requirement is continued, so as to continue to adjust the phase difference, which achieves the effect of enabling the iron loss power of the electric motor to be close to the heating power, continuously improving the heating efficiency of the electric motor and thus improving the speed of heating up of the battery.

In a possible implementation, in the above step S202, inputting the current to the electric motor and adjusting the phase of the three-phase pulses according to the heating power specifically includes the following steps.

S2021: inputting the current with a preset magnitude to the electric motor, and looking up a corresponding phase difference in a preset first comparison table according to the heating power, where the preset first comparison table includes a correspondence between a heating power and a phase difference.

In this step, the current with the preset magnitude may be that the current value is of the preset magnitude, or the voltage value is of the preset magnitude, which is not particularly limited in the present application. The preset first comparison table may be obtained through an experimental test in advance.

S2022: adjusting the phase of the three-phase pulses using the corresponding phase difference.

In this step, the phase of the three-phase pulses may be adjusted, so that the phase difference occurring in the three-phase pulses is of the same magnitude as the above corresponding phase difference.

As can be seen from the description of the above embodiment, the embodiment of the present application provides a specific manner of adjusting the phase. By looking up the phase difference corresponding to the heating power in the first comparison table, the phase difference close to or equal to the heating power is directly obtained, which reduces the time for subsequently adjusting the phase multiple times due to the insufficient iron loss power.

In a possible implementation, in the above step S203, detecting the electric motor iron loss power specifically includes: measuring an inlet-outlet temperature difference and a coolant flow rate of an electric drive system coolant, and determining the electric motor iron loss power according to the inlet-outlet temperature difference and the coolant flow rate.

In a possible implementation, a calculation formula for determining the electric motor iron loss power according to the inlet-outlet temperature difference and the coolant flow rate is as follows:

$$P = C \cdot D \cdot F \cdot \Delta T \cdot A$$

where P is the electric motor iron loss power, C is a coolant specific heat capacity, D is a coolant density, F is the coolant flow rate, $\Delta T$ is the inlet-outlet temperature difference, and A is a constant.

The measurement of the inlet-outlet temperature difference of the electric drive system coolant may be obtained by detection with a temperature sensor. The coolant flow rate may be obtained by measurement with a flow rate measuring instrument, or may be obtained by calculation from the power of a pump that causes the coolant to flow.

The temperature sensor may be a contact temperature sensor or a non-contact temperature sensor. The constant A may be used to unify the unit, and may also be adjusted based on an empirical value to eliminate an error. The coolant density D may be 1.0559kg/m$^3$, and the coolant specific heat capacity C may be 3.13. Different coolants may have different densities and specific heat capacities, which is not limited in the present application. The coolant flow rate may be 10L/min, which is only an example here, and the unit and value of the flow rate may also be adjusted according to different situations.

It can be seen from the description of the above embodiment that in the embodiment of the present application, the electric motor iron loss power is determined by the inlet-outlet temperature difference and the coolant flow rate of the electric drive system coolant that are obtained by measurement, which facilitates the phase adjustment.

In a possible implementation, in the above step S203, after adjusting the phase difference of the three-phase pulses, the method further includes:

S204: if the phase difference of the three-phase pulses reaches a maximum value, and the difference between the electric motor iron loss power and the heating power is greater than the preset value, continuously detecting the electric motor iron loss power and increasing a current value until the difference between the electric motor iron loss power and the heating power is less than the preset value.

In this step, increasing the current value may be increasing the current value according to a preset value, or may be determining the magnitude of the current that needs to be increased according to the difference between the electric motor iron loss power and the heating power.

Specifically, a corresponding current value that needs to be increased may be looked up in a preset third comparison table, and a relationship between a difference between an electric motor iron loss power and a heating power and a current value is stored in the third comparison table. In this step, "until the difference between the electric motor iron loss power and the heating power is less than a preset value" is similar to that in step S203, and is not described here again.

It can be seen from the description of the above embodiment that in the embodiment of the present application, the current is increased in a case that the phase difference reaches the maximum value and that the electric motor iron loss power does not reach the heating power and the difference between the electric motor iron loss power and the heating power is large, which achieves the effect of further increasing the heating efficiency of the electric motor.

In a possible implementation, after the above step S201, i.e. after receiving the heating instruction sent by the heat management system, where the heating instruction includes the heating power, the method further includes the following steps.

S202A: determining a current value of each phase of the three-phase pulses according to the heating power.

In this step, the current value of each phase of the three-phase pulses may be calculated according to the heating power and properties of the electric motor and the electric vehicle electronic control. The current value of each phase of the three-phase pulse may also be looked up in a preset fourth comparison table, where the fourth comparison table stores a relationship between a heating power and each phase of the three-phase pulses.

S203A: changing a duty cycle of at least one phase of the three-phase pulses to increase a copper loss.

In this step, the duty cycle may be changed by a symmetrical modulation method. When the duty cycle of one phase of the three-phase pulses is different from the other two phases, since the pulses of three phases do not overlap, the current will increase in the non-overlapping part, and the current will gradually decrease in the overlapping part. FIG. 4 is a schematic diagram of a duty cycle of three-phase pulses provided by an embodiment of the present application. As shown in FIG. 4, in the bold part where the pulses of three phases do not overlap, the current increases. The duty cycle change is usually small, and the current increases less. In the overlapping part of the pulses of three phases, the voltages of the three phases are the same. Due to an impedance in the circuit, the current slowly decreases. The maximum current value is small at this time, such as 2A in the figure, and the iron loss is small at this time.

S204A: measuring an actual copper loss power, and adjusting the phase of the three-phase pulses according to the actual copper loss power and the heating power to increase an iron loss.

In this step, the method of measuring the actual copper loss power may also be similar to the method used in the above step S203, i.e., the actual power may be obtained by measuring the coolant temperature change.

In a possible implementation, measuring the actual copper loss power specifically includes:

measuring its own current value and voltage value, and determining the actual copper loss power according to its own current value and voltage value; or, measuring an inlet-outlet temperature difference and a coolant flow rate of an electric drive system coolant, and determining the actual copper loss power of the electric motor according to the inlet-outlet temperature difference and the coolant flow rate.

Here, a calculation formula for determining the actual copper loss power according to its own current value and voltage value is as follows:

$$P_c = I_{dc} + U_{dc}$$

$P_c$ is the actual copper loss power, $I_{dc}$ is its own current value, and $U_{dc}$ is its own voltage value.

The method for determining the actual copper loss power of the electric motor according to the inlet-outlet temperature difference and the coolant flow rate is similar to the above step S203, and will not be repeated here.

S205A: continuously detecting a total loss power generated by the copper loss and the iron loss, determining a difference between the total loss power and the heating power, and adjusting the phase difference of the three-phase pulses according to the difference between the total loss power and the heating power until the difference between the total loss power and the heating power is less than a preset value, to realize the active heating of the electric motor.

This step is similar to the above step S203, and will not be repeated here.

As can be seen from the description of the above embodiment, the embodiment of the present application provides the method in which the method of adjusting the duty cycle is used for heating firstly, and in a case that the adjustment of the duty cycle is not enough to achieve the required heating power, the method of adjusting the phase is then used to supplement the heat, which can achieve the effect of further increasing the heating speed of the battery.

In a possible implementation, determining the current value of each phase of the three-phase pulses according to the heating power in the above step S204A specifically includes:

determining the current value of each phase of the three-phase pulses according to an electric motor resistance, a conduction voltage drop of a built-in power transistor, a single-switching loss per unit current of the built-in power transistor, a switching frequency of the built-in power transistor and a current relationship of the three-phase pulses.

In a possible implementation, a calculation formula for determining the current value of each phase of the three-phase pulses according to the electric motor resistance, the conduction voltage drop of the built-in power transistor, the single-switching loss per unit current of the built-in power transistor, the switching frequency of the built-in power transistor and the current relationship of the three-phase pulses is as follows:

$$P = \left(I_a^2 + I_b^2 + I_c^2\right)R + \left(I_a + I_b + I_c\right)V_{ce} + \left(I_a + I_b + I_c\right)Q \cdot F$$

where $-I_a = I_b + I_c$, $I_b = k \cdot I_c$

in the formula, $I_a$ is the current of phase a, $I_b$ is the current of phase b, $I_c$ is the current of phase c, R is the electric motor resistance, $V_{ce}$ is the conduction voltage drop of the built-in power transistor, Q is the single-switching loss per unit current of the built-in power transistor, F is the switching frequency of the built-in power transistor, and k is a constant determined according to a rotor position. Here, $-I_a=I_b+I_c$ and $I_b=k\cdot I_c$ represent the current relationship of the three-phase pulses. The built-in power transistor may be a power transistor built in the electric vehicle electronic control.

As can be seen from the description of the above embodiment, the embodiment of the present application provides the calculation method of the current value of each phase of the three-phase pulses, which can achieve the effect of enabling the initial current value to be relatively large and is thus beneficial to temperature rise.

In a possible implementation, adjusting the phase of the three-phase pulses according to the actual copper loss power and the heating power in the above step S204A includes the following steps.

S204A1: calculating a difference between the actual copper loss power and the heating power, and looking up a corresponding phase difference in a second comparison table according to the difference between the actual copper loss power and the heating power, where the second comparison table includes a correspondence between a difference between an actual copper loss power and a heating power and a phase difference.

This step is similar to the above step S2021, and will not be repeated here.

S204A2: adjusting the phase of the three-phase pulses using the corresponding phase difference.

This step is similar to the above step S2022, and will not be repeated here.

As can be seen from the description of the above embodiment, in the embodiment of the present application, the phase difference corresponding to the difference between the actual copper loss power and the heating power is obtained by looking up the correspondence, and the phase of the three-phase pulses is adjusted using the obtained phase difference, which achieves the effect of accelerating the heating speed of the electric motor.

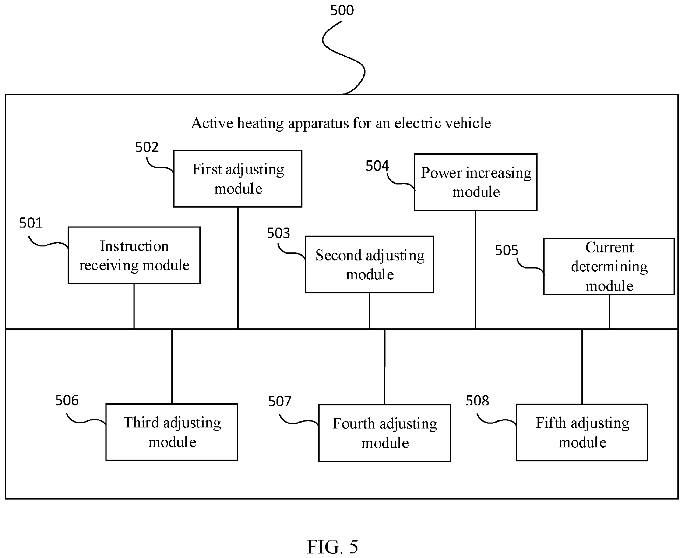

FIG. 5 is a schematic diagram of an active heating apparatus for an electric motor provided by an embodiment of the present application. As shown in FIG. 5, the active heating apparatus 500 for the electric motor includes: an instruction receiving module 501, a first adjusting module 502 and a second adjusting module 503.

The instruction receiving module 501 is configured to receive a heating instruction sent by a heat management system, where the heating instruction includes a heating power.

The first adjusting module 502 is configured to input a current to the electric motor and adjust a phase of three-phase pulses according to the heating power.

The second adjusting module 503 is configured to continuously detect an electric motor iron loss power, determine a difference between the electric motor iron loss power and the heating power, and adjust a phase difference of the three-phase pulses according to the difference between the electric motor iron loss power and the heating power until the difference between the electric motor iron loss power and the heating power is less than a preset value, to realize active heating of the electric motor.

The apparatus provided in this embodiment can be used to execute the technical solutions in the foregoing method embodiments. Implementation principles and technical effects thereof are similar, and details will not be described here again in this embodiment.

In a possible implementation, the first adjusting module 502 is specifically configured to: input the current with a preset magnitude to the electric motor, and look up a corresponding phase difference in a preset first comparison table according to the heating power, where the preset first comparison table includes a correspondence between a heating power and a phase difference; adjust the phase of the three-phase pulses using the corresponding phase difference.

The apparatus provided in this embodiment can be used to execute the technical solutions in the foregoing method embodiments. Implementation principles and technical effects thereof are similar, and details will not be described here again in this embodiment.

In a possible implementation, the second adjusting module 503 is specifically configured to: measure an inlet-outlet temperature difference and a coolant flow rate of an electric drive system coolant, and determine the electric motor iron loss power according to the inlet-outlet temperature difference and the coolant flow rate.

The apparatus provided in this embodiment can be used to execute the technical solutions in the foregoing method embodiments. Implementation principles and technical effects thereof are similar, and details will not be described here again in this embodiment.

In a possible implementation, for measuring the inlet-outlet temperature difference and the coolant flow rate of the electric drive system coolant, and determining the electric motor iron loss power according to the inlet-outlet temperature difference and the coolant flow rate, a calculation formula used by the second adjusting module 503 may be:

$$P=C \cdot D \cdot F \cdot \Delta T \cdot A$$

where P is the electric motor iron loss power, C is a coolant specific heat capacity, D is a coolant density, F is the coolant flow rate, $\Delta T$ is the inlet-outlet temperature difference, and A is a constant.

The apparatus provided in this embodiment can be used to execute the technical solutions in the foregoing method embodiments. Implementation principles and technical effects thereof are similar, and details will not be described here again in this embodiment.

Continue referring to FIG. 5. As shown in FIG. 5, in a possible implementation, the active heating apparatus 500 for the electric motor further includes a power increasing module 504.

The power increasing module 504 is configured to, if the phase difference of the three-phase pulses reaches a maximum value, and the difference between the electric motor iron loss power and the heating power is greater than the preset value, continuously detect the electric motor iron loss power and increase a current value until the difference between the electric motor iron loss power and the heating power is less than the preset value.

The apparatus provided in this embodiment can be used to execute the technical solutions in the foregoing method embodiments. Implementation principles and technical effects thereof are similar, and details will not be described here again in this embodiment.

Continue referring to FIG. 5. In a possible implementation, as shown in FIG. 5, the active heating apparatus 500 for the electric motor further includes: a current determining module 505, a third adjusting module 506, a fourth adjusting module 507 and a fifth adjusting module 508.

The current determining module 505 is configured to determine a current value of each phase of the three-phase pulses according to the heating power.

The third adjusting module 506 is configured to change a duty cycle of at least one phase of the three-phase pulses to increase a copper loss.

The fourth adjusting module 507 is configured to measure an actual copper loss power, and adjust the phase of the three-phase pulses according to the actual copper loss power and the heating power to increase an iron loss.

The fifth adjusting module 508 is configured to continuously detect a total loss power generated by the copper loss and the iron loss, determine a difference between the total loss power and the heating power, and adjust the phase difference of the three-phase pulses according to the difference between the total loss power and the heating power until the difference between the total loss power and the heating power is less than a preset value, to realize the active heating of the electric motor.

The apparatus provided in this embodiment can be used to execute the technical solutions in the foregoing method embodiments. Implementation principles and technical effects thereof are similar, and details will not be described here again in this embodiment.

In a possible implementation, the above current determining module 505 is specifically configured to determine the current value of each phase of the three-phase pulse according to an electric motor resistance, a conduction voltage drop of a built-in power transistor, a single-switching loss per unit current of the built-in power transistor, a switching frequency of the built-in power transistor and a current relationship of the three-phase pulses.

The apparatus provided in this embodiment can be used to execute the technical solutions in the foregoing method embodiments. Implementation principles and technical effects thereof are similar, and details will not be described here again in this embodiment.

In a possible implementation, a calculation formula used by the above current determining module 505 is as follows:

$$P=\left(I_a^2+I_b^2+I_c^2\right)R+\left(I_a+I_b+I_c\right)V_{ce}+\left(I_a+I_b+I_c\right)Q \cdot F$$

where $-I_a=I_b+I_c$, $I_b=k \cdot I_c$

in the formula, $I_a$ is the current of phase a, $I_b$ is the current of phase b, $I_c$ is the current of phase c, R is the electric motor resistance, $V_{ce}$ is the conduction voltage drop of the built-in power transistor, Q is the single-switching loss per unit current of the built-in power transistor, F is the switching frequency of the built-in power transistor, and k is a constant determined according to a rotor position.

The apparatus provided in this embodiment can be used to execute the technical solutions in the foregoing method embodiments. Implementation principles and technical effects thereof are similar, and details will not be described here again in this embodiment.

In a possible implementation, the fourth adjusting module 507 is specifically configured to: measure its own current value and voltage value, and determine the actual copper loss power according to its own current value and voltage value; or measure an inlet-outlet temperature difference and a coolant flow rate of an electric drive system coolant, and determine the actual copper loss power of the electric motor according to the inlet-outlet temperature difference and the coolant flow rate.

The apparatus provided in this embodiment can be configured to execute the technical solutions in the foregoing method embodiments. Implementation principles and technical effects thereof are similar, and details will not be described here again in this embodiment.

In a possible implementation, the fourth adjusting module 507 is specifically configured to: calculate a difference between the actual copper loss power and the heating power, and look up a corresponding phase difference in a second comparison table according to the difference between the actual copper loss power and the heating power, where the second comparison table includes a correspondence between a difference between an actual copper loss power and a heating power and a phase difference; adjust the phase of the three-phase pulses using the corresponding phase difference.

The apparatus provided in this embodiment can be used to execute the technical solutions in the foregoing method embodiments. Implementation principles and technical effects thereof are similar, and details will not be described here again in this embodiment.

In order to implement the above embodiments, an embodiment of the present application further provides an electronic device.

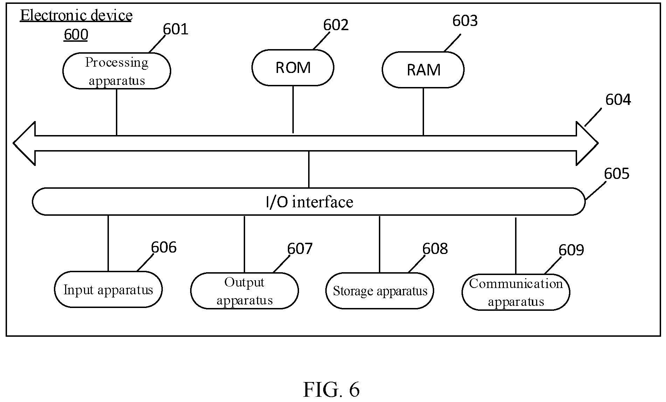

Referring to FIG. 6, FIG. 6 shows a schematic structural diagram of an electronic device 600 suitable for implementing an embodiment of the present application. The electronic device 600 may be a data processing device in an electric vehicle. The electronic device shown in FIG. 6 is merely an example, and should not bring any limitation to the function and use scope of the embodiments of the present application.

As shown in FIG. 6, the electronic device 600 may include a processing apparatus (e.g., a central processing unit, a graphics processing unit, etc.) 601, which may perform various appropriate actions and processing according to a program stored in a read only memory (Read Only Memory, ROM) 602 or a program loaded from a storage apparatus 608 into a random access memory (Random Access Memory, RAM) 603. In the RAM 603, various programs and data necessary for the operation of the electronic device 600 are also stored. The processing apparatus 601, the ROM 602 and the RAM 603 are connected to each other through a bus 604. An input/output (I/O) interface 605 is also connected to the bus 604.

Generally, the following apparatuses may be connected to the I/O interface 605: an input apparatus 606 including, for example, a touch screen, a touch pad, a keyboard, a mouse, a camera, a microphone, an accelerometer, a gyroscope, etc.; an output apparatus 607 including, for example, a liquid crystal display (Liquid Crystal Display, LCD), a speaker, a vibrator, etc.; the storage apparatus 608 including, for example, a tape, a hard disk, etc.; and a communication apparatus 609. The communication apparatus 609 may allow the electronic device 600 to perform wireless or wired communication with other devices to exchange data. Although FIG. 6 illustrates the electronic device 600 with various apparatuses, it should be understood that it is not necessary to implement or provide all of the illustrated apparatuses. More or fewer apparatuses may alternatively be implemented or provided.

In particular, according to embodiments of the present application, the processes described above with reference to the flowcharts may be implemented as computer software programs. For example, an embodiment of the present application includes a computer program product including a computer program carried on a computer-readable storage medium. The computer program includes program code for performing the method illustrated in the flowchart. In such an embodiment, the computer program may be downloaded from the network through the communication device 609 and installed, or installed from the storage apparatus 608, or installed from the ROM 602. When the computer program is executed by the processing apparatus 601, the above functions defined in the methods of the embodiments of the present application are performed.

It should be noted that the computer-readable storage medium described above in the present application may be a computer-readable signal medium or a computer storage medium, or any combination thereof. The computer-readable storage medium may be, for example, but not limited to, an electronic, magnetic, optical, electromagnetic, infrared or semiconductor system, apparatus or device, or any combination thereof. More specific examples of the computer-readable storage medium may include, but not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present application, a computer-readable storage medium may be any tangible medium that contains or stores a program for use by or in connection with an instruction execution system, apparatus or device. In the present application, a computer-readable signal medium may include a data signal propagated in baseband or as part of a carrier wave, in which computer-readable program code is carried. Such propagated data signal may take a variety of forms including, but not limited to, an electromagnetic signal, an optical signal, or any suitable combination of the foregoing. A computer-readable signal medium may also be any computer-readable storage medium other than the computer-readable storage medium, and can send, propagate or transmit a program for use by or in connection with an instruction execution system, apparatus or device. Program code contained on a computer-readable storage medium may be transmitted using any appropriate medium, including but not limited to: a wire, an optical cable, RF (radio frequency), etc., or any suitable combination of the foregoing.

The computer-readable storage medium may be included in the above electronic device, or may exist alone without being assembled into the electronic device.

The computer-readable storage medium carries one or more programs, and when the one or more programs are executed by the electronic device, the electronic device is caused to perform the methods shown in the foregoing embodiments.

The computer program code for carrying out operations of the present application may be written in one or more programming languages, including object-oriented programming languages such as Java, Smalltalk, C++, and conventional procedural programming languages such as the "C" language or similar programming languages, or combinations thereof. The program code may be executed entirely on a user computer, or partly on the user computer, or as a stand-alone software package, or partly on the user computer and partly on a remote computer, or entirely on the remote computer or server. In the case of a remote computer, the remote computer may be connected to the user computer through any type of network, including a local area network (Local Area Network, LAN) or a wide area Network (Wide Area Network, WAN), or it may be connected to an external computer (for example, through the Internet using an Internet service provider).

The flowcharts and block diagrams in the accompanying drawings illustrate architectures, functions and operations of possible implementations of systems, methods and computer program products according to various embodiments of the present application. In this regard, each block in the flowcharts or block diagrams may represent a module, a program segment, or a portion of code, which contains one or more executable instructions for implementing the specified logical functions. It should also be noted that in some alternative implementations, the functions noted in the blocks may also occur in a different order than those noted in the figures. For example, two blocks shown in succession may in fact be executed substantially in parallel, or they may sometimes be executed in the reverse order, depending on the function involved. It is also noted that each block in the block diagrams and/or flowcharts, and combinations of blocks in the block diagrams and/or flowcharts, can be implemented with dedicated hardware-based systems that perform the specified functions or operations, or can be implemented with a combination of dedicated hardware and computer instructions.

The modules described in the embodiments of the present application may be implemented by means of software or hardware. The name of the unit does not constitute a limitation on the module itself under certain circumstances. For example, the first adjusting module may also be described as a "three-phase pulse phase adjusting module".

The functions described herein above may be performed, at least in part, by one or more hardware logic components. For example, and without limitation, exemplary types of hardware logic components that may be used include: Field Programmable Gate Arrays (FPGAs), Application Specific Integrated Circuits (ASICs), Application Specific Standard Products (ASSPs), System on a Chip (SOCs), Complex Programmable Logic Devices (CPLDs), etc.

In the context of the present application, a machine-readable medium may be a tangible medium that can contain or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination of the foregoing. More specific examples of the machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is only a description of the preferred embodiments of the present application and the applied technical principles. Those skilled in the art should understand that the disclosure scope involved in the present application is not limited to the technical solutions formed by the specific combination of the above technical features, and should also cover other technical solutions formed by any combination of the above technical features or their equivalent features without departing from the above disclosed concept, for example, the technical solution formed by replacing the above features with (but not limited to) technical features having functions similar to those disclosed in the present application.

Other embodiments of the present application will readily occur to those skilled in the art upon consideration of the specification and practice of the invention disclosed herein. The present application is intended to cover any variations, uses or adaptive changes of the present application, and these variations, uses or adaptive changes follow the general principles of the present application and include the common knowledge or conventional technical means in the technical field that is not disclosed in the present application. The specification and embodiments are considered as exemplary only, with a true scope and spirit of the present application being indicated by the following claims.

It should be understood that the present application is not limited to the precise structures that have been described above and illustrated in the accompanying drawings, and that various modifications and changes may be made without departing from the scope thereof. The scope of the present application is limited only by the appended claims.

**Claims**

1.  An active heating method for an electric motor, comprising:

    receiving a heating instruction sent by a heat management system, wherein the heating instruction comprises a heating power;
    inputting a current to the electric motor and adjusting a phase of three-phase pulses according to the heating power;
    continuously detecting an electric motor iron loss power, determining a difference between the electric motor iron loss power and the heating power, adjusting and adjusting a phase difference of the three-phase pulses according to the difference between the electric motor iron loss power and the heating power until the difference between the electric motor iron loss power and the heating power is less than a preset value, to realize active heating of the electric motor.

2.  The method according to claim 1, wherein the inputting the current to the electric motor and adjusting the phase of the three-phase pulses according to the heating power comprises:

    inputting the current with a preset magnitude to the electric motor, and looking up a corresponding phase difference in a preset first comparison table according to the heating power, wherein the preset first comparison table comprises a correspondence between heating power and a phase difference;
    adjusting the phase of the three-phase pulses using the corresponding phase difference.

3.  The method according to claim 1 or 2, wherein the detecting the electric motor iron loss power comprises:
    measuring an inlet-outlet temperature difference and a coolant flow rate of an electric drive system coolant, and determining the electric motor iron loss power according to the inlet-outlet temperature difference and the coolant flow rate.

4.  The method according to claim 3, wherein a calculation formula for determining the electric motor iron loss power according to the inlet-outlet temperature difference and the coolant flow rate is as follows:

$$P = C \cdot D \cdot F \cdot \Delta T \cdot A$$

    wherein P is the electric motor iron loss power, C is a coolant specific heat capacity, D is a coolant density, F is the coolant flow rate, $\Delta T$ is the inlet-outlet temperature difference, and A is a constant.

5.  The method according to any one of claims 1 to 4, wherein after adjusting the phase difference of the three-phase pulses, the method further comprises:
    if the phase difference of the three-phase pulses reaches a maximum value, and the difference between the electric motor iron loss power and the heating power is greater than the preset value, continuously detecting the electric motor iron loss power and increasing a current value until the difference between the electric motor iron loss power and the heating power is less than the preset value.

6.  The method according to any one of claims 1 to 5, wherein after receiving the heating instruction sent by the heat management system, wherein the heating instruction comprises the heating power, the method further comprises:

    determining a current value of each phase of the three-phase pulses according to the heating power;
    changing a duty cycle of at least one phase of the three-phase pulses to increase a copper loss;
    measuring an actual copper loss power, and adjusting the phase of the three-phase pulses according to the actual copper loss power and the heating power to increase an iron loss;
    continuously detecting a total loss power generated by the copper loss and the iron loss, determining a difference between the total loss power and the heating power, and adjusting the phase difference of the three-phase pulse according to the difference between the total loss power and the heating power until the difference between the total loss power and the heating power is less than a preset value, to realize the active heating of the electric motor.

7.  The method according to claim 6, wherein the determining the current value of each phase of the three-phase pulses according to the heating power comprises:

determining the current value of each phase of the three-phase pulse according to an electric motor resistance, a conduction voltage drop of a built-in power transistor, a single-switching loss per unit current of the built-in power transistor, a switching frequency of the built-in power transistor and a current relationship of the three-phase pulses.

8. The method according to claim 7, wherein a calculation formula for determining the current value of each phase of the three-phase pulses according to the electric motor resistance, the conduction voltage drop of the built-in power transistor, the single-switching loss per unit current of the built-in power transistor, the switching frequency of the built-in power transistor and the current relationship of the three-phase pulses is as follows:

$$P=\left(I_a^2+I_b^2+I_c^2\right)R+\left(I_a+I_b+I_c\right)V_{ce}+\left(I_a+I_b+I_c\right)Q\cdot F$$

wherein $-I_a=I_b+I_c$, $I_b=k\cdot I_c$
in the formula, $I_a$ is a current of phase a, $I_b$ is a current of phase b, $I_c$ is a current of phase c, R is the electric motor resistance, $V_{ce}$ is the conduction voltage drop of the built-in power transistor, Q is the single-switching loss per unit current of the built-in power transistor, F is the switching frequency of the built-in power transistor, and k is a constant determined according to a rotor position.

9. The method according to any one of claims 6 to 8, wherein the measuring the actual copper loss power comprises:

measuring its own current value and voltage value, and determining the actual copper loss power according to its own current value and voltage value; or
measuring an inlet-outlet temperature difference and a coolant flow rate of an electric drive system coolant, and determining the actual copper loss power of the electric motor according to the inlet-outlet temperature difference and the coolant flow rate.

10. The method according to any one of claims 6 to 9, wherein the adjusting the phase of the three-phase pulses according to the actual copper loss power and the heating power comprises:

calculating a difference between the actual copper loss power and the heating power, and looking up a corresponding phase difference in a second comparison table according to the difference between the actual copper loss power and the heating power, wherein the second comparison table comprises a correspondence between a difference between an actual copper loss power and a heating power and a phase difference;
adjusting the phase of the three-phase pulses using the corresponding phase difference.

11. An active heating apparatus for an electric motor, comprising:

an instruction receiving module, configured to receive a heating instruction sent by a heat management system, wherein the heating instruction comprises a heating power;
a first adjusting module, configured to input a current to the electric motor and adjust a phase of three-phase pulses according to the heating power;
a second adjusting module, configured to continuously detect an electric motor iron loss power, determine a difference between the electric motor iron loss power and the heating power, and adjust a phase difference of the three-phase pulses according to the difference between the electric motor iron loss power and the heating power until the difference between the electric motor iron loss power and the heating power is less than a preset value, to realize active heating of the electric motor.

12. An electronic device, comprising: a processor, and a memory communicatively connected to the processor;

the memory stores computer execution instructions;
the processor executes the computer execution instructions stored in the memory, so that the processor executes the active heating method for the electric motor according to any one of claims 1 to 10.

13. A computer-readable storage medium, wherein the computer-readable storage medium stores computer execution instructions, and when the computer execution instructions are executed by a processor, the active heating method for the electric motor according to any one of claims 1 to 10 is implemented.

14. A computer program product, comprising a computer program, wherein the active heating method for the electric motor according to any one of claims 1 to 10 is implemented when the computer program is executed by a processor.

| Heat management system | Heating instruction → | Electric vehicle electronic control | Adjust phase → | Electric motor |

FIG. 1

S201

Receiving a heating instruction sent by a heat management system, where the heating instruction includes a heating power

S202

Inputting a current to an electric motor and adjusting a phase of three-phase pulses according to the heating power

S203

Continuously detecting an electric motor iron loss power, determining a difference between the electric motor iron loss power and the heating power, and adjusting a phase difference of the three-phase pulses according to the difference between the electric motor iron loss power and the heating power until the difference between the electric motor iron loss power and the heating power is less than a preset value, to realize active heating of the electric motor

FIG. 2

FIG. 3

FIG. 4

500

Active heating apparatus for an electric vehicle

502

First adjusting module

504

Power increasing module

501

Instruction receiving module

503

Second adjusting module

505

Current determining module

506

Third adjusting module

507

Fourth adjusting module

508

Fifth adjusting module

FIG. 5

Electronic device
600

Processing
apparatus
601

ROM
602

RAM
603

604

I/O interface
605

Input apparatus
606

Output
apparatus
607

Storage apparatus
608

Communication
apparatus
609

FIG. 6

## INTERNATIONAL SEARCH REPORT

| International application No. |
| --- |
| **PCT/CN2023/081045** |

### A. CLASSIFICATION OF SUBJECT MATTER

B60L 15/20(2006.01)i;  B60L 58/27(2019.01)i;  H02P 29/62(2016.01)i

According to International Patent Classification (IPC) or to both national classification and IPC

### B. FIELDS SEARCHED

Minimum documentation searched (classification system followed by classification symbols)

IPC：B60L H02P

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI: 威睿电动汽车, 极氪汽车, 浙江吉利控股集团有限公司, 黎明福, 徐循进, 张云辉, 电池, 电机, 电动机, 马达, 加热, 三相, 脉冲, 相位, 调整, 调节, 铁耗, 铁损, 损耗, battery, motor, heat, three, phase, different, pulse, adjust, regulation, consumption, loss, iron, copper

### C. DOCUMENTS CONSIDERED TO BE RELEVANT

| Category* | Citation of document, with indication, where appropriate, of the relevant passages | Relevant to claim No. |
| --- | --- | --- |
| PX | CN 114604103 A (WEIRUI ELECTRIC AUTOMOBILE TECHNOLOGY NINGBO CO., LTD. et al.) 10 June 2022 (2022-06-10)<br>claims 1-14, description, paragraphs [0038]-[0148], and figures 1-6 | 1-14 |
| Y | CN 113858966 A (BYD CO., LTD.) 31 December 2021 (2021-12-31)<br>description, paragraphs [0027]-[0105], and figures 1-8 | 1-5, 11-14 |
| Y | CN 209472083 U (NIO NEXTEV LTD.) 08 October 2019 (2019-10-08)<br>description, paragraphs [0030]-[0088], and figures 1-11 | 1-5, 11-14 |
| Y | CN 114080751 A (HUAWEI DIGITAL ENERGY TECHNOLOGY CO., LTD.) 22 February 2022 (2022-02-22)<br>description, paragraphs [0047]-[0128], and figures 1-16 | 1-5, 11-14 |
| A | JP 2006250449 A (HITACHI LTD.) 21 September 2006 (2006-09-21)<br>entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 June 2023** | **16 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081045**

| Patent document<br>cited in search report | | | Publication date<br>(day/month/year) | Patent family member(s) | | | Publication date<br>(day/month/year) |
|---|---|---|---|---|---|---|---|
| CN | 114604103 | A | 10 June 2022 | None | | | |
| CN | 113858966 | A | 31 December 2021 | None | | | |
| CN | 209472083 | U | 08 October 2019 | CN | 109346802 | A | 15 February 2019 |
| | | | | CN | 109346802 | B | 08 February 2022 |
| CN | 114080751 | A | 22 February 2022 | WO | 2022109808 | A1 | 02 June 2022 |
| JP | 2006250449 | A | 21 September 2006 | None | | | |

Form PCT/ISA/210 (patent family annex) (July 2022)

**EP 4 424 541 A1**

**REFERENCES CITED IN THE DESCRIPTION**

**Patent documents cited in the description**

- CN 202210264853